# EUROPEAN PATENT APPLICATION

(11) **EP 4 815 359 A1**
(43) Date of publication of application: **30.09.2026**
(21) Application number: 26167228.1
(22) Date of filing: 24.03.2026
(51) Int. Cl.: H04L 5/00

(54) **DMRS DESIGN AND OVERHEAD REDUCTION**

(30) Priority: 27.03.2025 US 202563778963 P; 20.03.2026 US 202619573008
(71) Applicant: Apple Inc., Cupertino, CA 95014 (US)
(72) Inventor: YANG, Weidong, Cupertino, 95014 (US); BHAMRI, Ankit, Cupertino, 95014 (US); ZHANG, Dawei, Cupertino, 95014 (US); SUN, Haitong, Cupertino, 95014 (US); NIU, Huaning, Cupertino, 95014 (US); HAN, Seung Hee, Cupertino, 95014 (US); ZENG, Wei, Cupertino, 95014 (US)
(74) Representative: Zacco Denmark A/S

(57) **Abstract**

An apparatus configured to determine a demodulation reference signal (DMRS) configuration comprising a DMRS pattern for a frequency domain orthogonal cover code 8 (FD-OCC-8) and generate, for transmission to a base station, DMRS in accordance with the DMRS configuration. In some examples, the DMRS include DMRS eType 1 DMRS or DMRS eType 2 DMRS.

## Description

### Technical Field

The example embodiments relate to improved demodulation reference signals (DMRS) design. Specifically, the example embodiments relate to DMRS Type 1 and DMRS Type 2 designs with a Frequency Division Orthogonal Cover Code (FD-OCC) 8 applied. Additionally, the example embodiments relate to improved DMRS designs using partial DMRS signals and/or full DMRS.

### Background

Demodulation reference signals (DMRS) transmitted by a user equipment (UEs) may be used by a base station to estimate the channel state between the UE and the base station. In Sixth Generation (6G) networks, it is anticipated that the spectrum of Frequency Range 3 (FR3) (e.g., 7.125 GHz to 24.25 GHz) may be used for communications. In addition, it is anticipated that a larger number of antenna ports may be used for Channel State Information (CSI). Other enhancements in 6G networks may also include opportunistic energy saving, coexistence with 5G networks and transmission scheme enhancements such as Physical Resource Block (PRB) bundling and enhanced resource allocation schemes. Current DMRS designs may not be suitable for use in 6G networks having these and other enhancements.

### Summary

Some example embodiments are related to an apparatus having processing circuitry coupled to memory, wherein the processing circuitry is configured to determine a demodulation reference signal (DMRS) configuration comprising a DMRS pattern for a frequency domain orthogonal cover code 8 (FD-OCC-8) and generate, for transmission to a base station, DMRS in accordance with the DMRS configuration.

Other example embodiments are related to a method for determining a demodulation reference signal (DMRS) configuration comprising a DMRS pattern for a frequency domain orthogonal cover code 8 (FD-OCC-8) and generating, for transmission to a base station, DMRS in accordance with the DMRS configuration.

### Brief Description of the Drawings

Fig. 1 shows an example network arrangement according to various example embodiments.
Fig. 2 shows an example UE according to various example embodiments.
Fig. 3 shows an example base station according to various example embodiments.
Fig. 4A shows a first example resource grid for one symbol of Frequency Domain-Orthogonal Cover Code (FD-OCC) 8 for DMRS eType 1 scheme in Frequency Range 3 (FR3) according to various example embodiments.
Fig. 4B shows a second example resource grid for one symbol of FD-OCC for DMRS eType 2 in FR3 according to various example embodiments.
Fig. 5A shows a first example resource grid for a 6G DMRS design comprising both full and partial DMRS symbols for a DMRS eType 1 scheme according to various example embodiments.
Fig. 5B shows a second example resource grid for a 6G DMRS design comprising both full and partial DMRS symbols for a DMRS eType 1 scheme according to various example embodiments.
Fig. 5C shows a third example resource grid for a 6G DMRS design comprising both full and partial DMRS symbols for a DMRS eType 1 scheme according to various example embodiments.
Fig. 5D shows a fourth example resource grid for a 6G DMRS design comprising both full and partial DMRS symbols for a DMRS eType 2 scheme according to various example embodiments.
Fig. 6A shows a first example resource grid for a 6G DMRS design comprising multiple partial DMRS symbols for a DMRS eType 1 scheme according to various example embodiments.
Fig. 6B shows a second example resource grid for a 6G DMRS design comprising multiple partial DMRS symbols for a DMRS eType 1 scheme according to various example embodiments.
Fig. 7 shows an example resource grid for a 6G DMRS design comprising a conventional DMRS design and multiple ports of Phase Tracking Reference Signals (PT-RS) according to various example embodiments.
Fig. 8 shows an example of a resource grid for a 6G DMRS design comprising both full and partial DMRS symbols for a DMRS eType 1 scheme according to various example embodiments
Fig. 9 shows an example equation for calculating the spreading matrix at in a Physical Downlink Shared Channel (PDSCH) k to reduce Channel State Information Reference Signals (CSI-RS) overhead according to various example embodiments.

### Detailed Description

The example embodiments may be further understood with reference to the following description and the related appended drawings, wherein like elements are provided with the same reference numerals. The example embodiments include techniques that are configured to enable a user equipment (UE) to transmit eight resource elements of DMRS Type 1 or DMRS Type 2 that may make up a code division multiplexing group that an OCC is applied to.

The example embodiments are described with regard to a UE. However, reference to the term UE is merely provided for illustrative purposes. The example embodiments may be utilized with any electronic component that is configured with the hardware, software, and/or firmware to exchange information (e.g., control information) and/or data with the network. Therefore, the UE as described herein is used to represent any suitable electronic device.

In 5G, and more specifically, Rel-18, OCC 4 was introduced. Now, for 6G, a new reference signal design is needed that takes into account various 6G related considerations such as frequency range (FR) 3, green network, multi-RAT spectrum sharing (MRSS), and various transmission (Tx) schemes.

The example embodiments relate to improved DMRS designs for 6G where DMRS Type 1 and DRMS Type 2 signals use a frequency domain orthogonal cover code (FD-OCC) of 8. Among the improved DMRS designs described below are a full DMRS symbol and partial DMRS symbol design, a DMRS design comprising multiple partial DMRS symbols, and a DMRS design comprising both a conventional DMRS design with multiple ports of phase tracking reference signals (PTRS) .

The example embodiments provide 6G DMRS designs that account for the above-mentioned design considerations while also minimizing DMRS overhead.

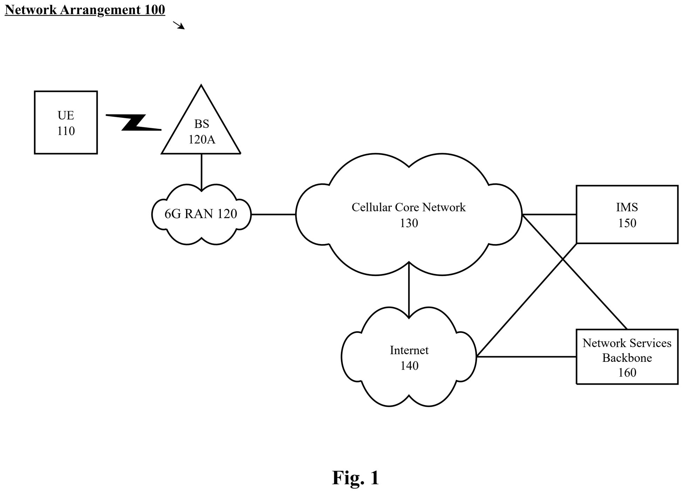

Fig. 1 shows an example network arrangement 100 according to various example embodiments. The example network arrangement 100 includes the UE 110. The UE 110 may be any type of electronic component that is configured to communicate via a network, e.g., mobile phones, tablet computers, desktop computers, smartphones, phablets, embedded devices, wearables, Internet of Things (IoT) devices, etc. An actual network arrangement may include any number of UEs being used by any number of users. Thus, the example of a single UE 110 is merely provided for illustrative purposes.

The UE 110 may be configured to communicate with one or more networks. In the example of the network arrangement 100, the network with which the UE 110 may wirelessly communicate is a 6G radio access network (RAN) 120. However, the UE 110 may also communicate with other types of networks (e.g., 5G, 5G cloud RAN, a next generation RAN (NG-RAN), a long term evolution (LTE) RAN, a legacy cellular network, a WLAN, etc.) and the UE 110 may also communicate with networks over a wired connection. With regard to the example embodiments, the UE 110 may establish a connection with the 6G RAN 120. Therefore, the UE 110 may have a 6G chipset to communicate with the 6G RAN 120.

The 6G RAN 120 may be a portion of a cellular network that may be deployed by a network carrier (e.g., Verizon, AT&T, T-Mobile, etc.). The 6G RAN 120 may include, for example, cells or base stations (e.g., Node Bs, eNodeBs, HeNBs, eNBS, gNBs, gNodeBs, macrocells, microcells, small cells, femtocells, etc.) that are configured to send and receive traffic from UEs that are equipped with the appropriate cellular chip set.

The BS 120A may include one or more communication interfaces to exchange data and/or information with camped UEs, the 6G RAN 120, the cellular core network 130, the internet 140, etc. Further, the BS 120A may include a processor configured to perform various operations. For example, the processor may be configured to perform operations related to receiving Type 1 or Type 2 DMRS signals with an FD-OCC 8. However, reference to a processor is merely for illustrative purposes. The operations of the BS 120A may also be represented as a separate incorporated component of the base station or may be a modular component coupled to the node, e.g., an integrated circuit with or without firmware. For example, the integrated circuit may include input circuitry to receive signals and processing circuitry to process the signals and other information. In addition, in some base stations, the functionality of the processor is split among two or more processors such as a baseband processor and an applications processor. The example embodiments may be implemented in any of these or other configurations of a base station.

Any suitable association procedure may be performed for the UE 110 to connect to the 6G RAN 120. For example, as discussed above, the 6G RAN 120 may be associated with a particular cellular provider where the UE 110 and/or the user thereof has a contract and credential information (e.g., stored on a SIM card). Upon detecting the presence of the 6G RAN 120, the UE 110 may transmit the corresponding credential information to associate with the 6G RAN 120. More specifically, the UE 110 may associate with a specific cell or base station (e.g., BS 120A). As mentioned above, the use of the 6G RAN 120 is for illustrative purposes and any appropriate type of RAN may be used.

In addition to the 6G RAN 120, the network arrangement 100 also includes a cellular core network 130, the Internet 140, an IP Multimedia Subsystem (IMS) 150, and a network services backbone 160. The cellular core network 130 may be considered to be the interconnected set of components that manages the operation and traffic of the cellular network. It may include the EPC and/or the 5GC. The cellular core network 130 also manages the traffic that flows between the cellular network and the Internet 140. The IMS 150 may be generally described as an architecture for delivering multimedia services to the UE 110 using the IP protocol. The IMS 150 may communicate with the cellular core network 130 and the Internet 140 to provide the multimedia services to the UE 110. The network services backbone 160 is in communication either directly or indirectly with the Internet 140 and the cellular core network 130. The network services backbone 160 may be generally described as a set of components (e.g., servers, network storage arrangements, etc.) that implement a suite of services that may be used to extend the functionalities of the UE 110 in communication with the various networks.

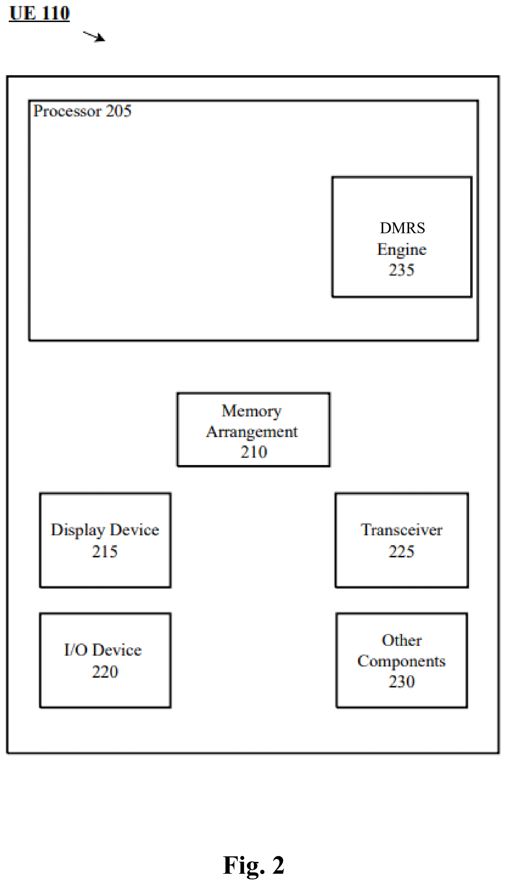

Fig. 2 shows an example UE 110 according to various example embodiments. The UE 110 will be described with regard to the network arrangement 100 of Fig. 1. The UE 110 may include a processor 205, a memory arrangement 210, a display device 215, an input/output (I/O) device 220, a transceiver 225 and other components 230. The other components 230 may include, for example, an audio input device, an audio output device, a power supply, a data acquisition device, ports to electrically connect the UE 110 to other electronic devices, etc.

The processor 205 may be configured to execute a plurality of engines of the UE 110. For example, the engines may include a DMRS engine 235. The DMRS engine 235 may perform various operations related to transmitting Type 1 or Type 2 DMRS signals with an FD-OCC 8.

The above referenced engine 235 being an application (e.g., a program) executed by the processor 205 is merely provided for illustrative purposes. The functionality associated with the engine 235 may also be represented as a separate incorporated component of the UE 110 or may be a modular component coupled to the UE 110, e.g., an integrated circuit with or without firmware. For example, the integrated circuit may include input circuitry to receive signals and processing circuitry to process the signals and other information. The engines may also be embodied as one application or separate applications. In addition, in some UEs, the functionality described for the processor 205 is split among two or more processors such as a baseband processor and an applications processor. The example embodiments may be implemented in any of these or other configurations of a UE.

The memory arrangement 210 may be a hardware component configured to store data related to operations performed by the UE 110. The display device 215 may be a hardware component configured to show data to a user while the I/O device 220 may be a hardware component that enables the user to enter inputs. The display device 215 and the I/O device 220 may be separate components or integrated together such as a touchscreen.

The transceiver 225 may be a hardware component configured to establish a connection with the 6G RAN 120. Accordingly, the transceiver 225 may operate on a variety of different frequencies or channels (e.g., set of consecutive frequencies). The transceiver 225 includes circuitry configured to transmit and/or receive signals (e.g., control signals, data signals). Such signals may be encoded with information implementing any one of the methods described herein. The processor 205 may be operably coupled to the transceiver 225 and configured to receive from and/or transmit signals to the transceiver 225. The processor 205 may be configured to encode, decode and/or process signals (e.g., signaling from a base station of a network) for implementing any one of the methods described herein.

In the example of Fig. 2, the processor 205 and the radio frequency (RF) circuitry (e.g., transceiver 225) are illustrated as separate components. However, in some example embodiments, the RF circuitry and the processing circuitry may be integrated into the same chip, e.g., a system on chip that includes a baseband processor and RF circuitry.

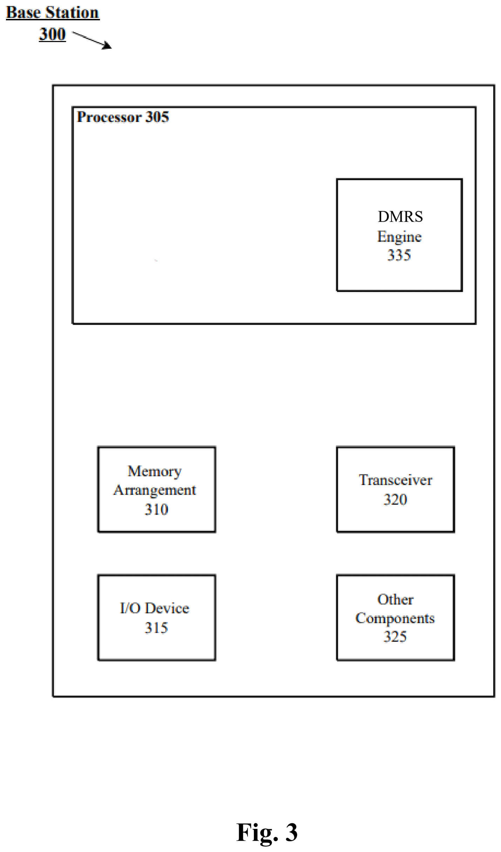

Fig. 3 shows an example base station 300 (e.g., BS 120A of Fig. 1) according to various example embodiments. The BS 300 may represent any access node of the 6G network through which the UE 110 may establish a connection and manage network operations.

The BS 300 may include a processor 305, a memory arrangement 310, an input/output (I/O) device 315, a transceiver 320, and other components 325. The other components 325 may include, for example, an audio input device, an audio output device, a battery, a data acquisition device, ports to electrically connect the BS 300 to other electronic devices, etc.

The processor 305 may be configured to execute a plurality of engines of the BS 300. For example, the engines may include a DMRS engine 335. The DMRS engine 335 may be configured to perform operations related to receiving Type 1 or Type 2 DMRS signals with an FD-OCC 8.

The above noted engines each being an application (e.g., a program) executed by the processor 305 is only example. The functionality associated with the engines may also be represented as a separate incorporated component of the BS 300 or may be a modular component coupled to the BS 300, e.g., an integrated circuit with or without firmware. For example, the integrated circuit may include input circuitry to receive signals and processing circuitry to process the signals and other information. In addition, in some gNBs, the functionality described for the processor 305 is split among a plurality of processors (e.g., a baseband processor, an applications processor, etc.). The example embodiments may be implemented in any of these or other configurations of a gNB.

The memory arrangement 310 may be a hardware component configured to store data related to operations performed by the UE 110. The I/O device 315 may be a hardware component or ports that enable a user to interact with the BS 300.

The transceiver 320 may be a hardware component configured to exchange data with the UE 110 and any other UE in the system 100. The transceiver 320 may operate on a variety of different frequencies or channels (e.g., set of consecutive frequencies). Therefore, the transceiver 320 may include one or more components (e.g., radios) to enable the data exchange with the various networks and UEs. The transceiver 320 includes circuitry configured to transmit and/or receive signals (e.g., control signals, data signals). Such signals may be encoded with information implementing any one of the methods described herein. The processor 305 may be operably coupled to the transceiver 320 and configured to receive from and/or transmit signals to the transceiver 320. The processor 305 may be configured to encode, decode and/or process signals (e.g., signaling from a UE) for implementing any one of the methods described herein.

In the example of Fig. 3, the processor 305 and the radio frequency (RF) circuitry (e.g., transceiver 320) are illustrated as separate components. However, in some example embodiments, the RF circuitry and the processing circuitry may be integrated into the same chip, e.g., a system on chip that includes a baseband processor and RF circuitry.

The example embodiments relate to improved DMRS design for 6G. Specifically, the example embodiments relate to DMRS Type 1 and DMRS Type 2 designs with an FD-OCC 8 applied. Additionally, the example embodiments relate to improved DMRS designs using partial DMRS signals, full DMRS in some PRBs and/or OFDM symbols and partial DMRS in other PRBs and/or OFDM symbols, or another design where a conventional DMRS design is used in conjunction with PT-RS. In the case of the DMRS and PT-RS design, quasi-orthogonal cover codes may be applied so that the DMRS signals sent from the UE to the base station do not interfere with each other and to reduce DMRS overhead. The following describes some example use cases in greater detail.

In a first aspect of the example embodiments, a DMRS Type 1 and DMRS Type 2 with an FD-OCC 8 applied is disclosed. Throughout the remainder of this description, DMRS eType 1 and eType 2 signals with 8 FD-OCC applied may be transmitted by a UE and received by a base station or transmitted by a base station and received by a UE.

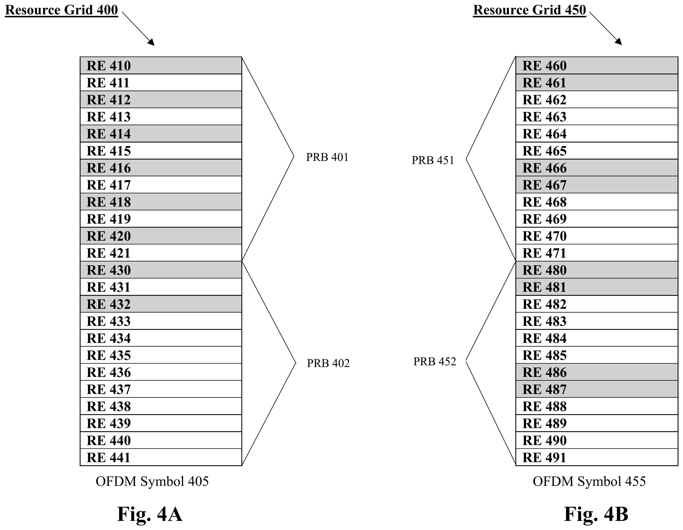

Fig. 4A shows a first example resource grid 400 for one symbol of frequency domain orthogonal cover code (FD-OCC) 8 for DMRS eType 1 in FR3 according to various example embodiments. The resource grid 400 depicts resource elements (REs) 410 to 421 of a physical resource block (PRB) 401 and REs 430 to 441 of a PRB 402. The REs 410 to 421 of the PRB 401 and the REs 430-441 of the PRDB 402 correspond to orthogonal frequency division multiplexing (OFDM) symbol 405. The OFDM symbol 405 may correspond to any OFDM symbol of a slot, e.g., any of the 14 symbols in the case of a normal cyclic prefix (CP) or any of the 12 symbols in the case of an extended CP. In this example, the symbol 405 may correspond to the OFMD symbol 0 of the slot. Therefore, while the resource grid 400 depicts a 24x1 grid, the resource grid for the entire slot may be a 24x14 resource grid (normal CP) or a 24x12 grid (extended CP). For illustrative purposes, the remaining symbols of the slots are not shown in this example. However, the DMRS may be inserted into any other symbol of the slot.

The resource grid 400 depicts a symbol of an FD-OCC 8 pattern for eType 1 DMRS. To depict this specific pattern, REs 410, 412, 414, 416, 418, 420, 430 and 432 are highlighted. These eight REs comprise a code division multiplexing (CDM) group 0 to which the FD-OCC 8 pattern may be applied. As shown in Fig. 4A, the FD-OCC 8 pattern comprises REs from both PRB 0, e.g., REs 410, 412, 416, 418 and 420 as well as REs from PRB 1, e.g., REs 430 and 432. The REs 410, 412, 414, 416, 418, 420, 420 and 432 may respectively correspond to RE0, RE2, RE4, RE6, RE8, RE10 of PRB0 and RE0 and RE2 of PRB 1 of the OFDM symbol 0. This pattern may be repeated for the symbol over the bandwidth of the UE, e.g., wideband, bandwidth part (BWP), etc.

Fig. 4B shows a second example resource grid 450 for one symbol of FD-OCC for DMRS eType 2 in FR3 according to various example embodiments. The resource grid 450 depicts REs 460 to 471 of a PRB 451 and REs 480 to 491 of a PRB 452. The REs 460-471 and 480-491 correspond to an OFDM symbol 455. Similar to the example of Fig. 4A, only one symbol 455 is shown in the resource grid 450. However, the slot may include more OFDM symbols.

The resource grid 450 depicts a symbol of an FD-OCC 8 pattern for eType 2 DMRS. To depict this specific pattern, REs 460, 461 466, 467, 480, 481, 486 and 487 are highlighted. These eight REs comprise a CDM group 0 to which the FD-OCC 8 pattern may be applied. The FD-OCC 8 pattern comprises resource elements from both PRB 451, e.g., REs 460, 461, 466 and 467 as well as resource elements from PRB 452, e.g., REs 480, 481, 486 and 487. The REs 460, 461, 466, 467, 480, 481, 486 and 487 respectively correspond to RE0, RE1, RE6 and RE7 of the PRB0 and RE0, RE1, RE6 and RE7 of the PRB 1 of the OFDM symbol 0. This pattern may be repeated for the symbol over the bandwidth of the UE, e.g., wideband, bandwidth part (BWP), etc.

In the above example embodiments of eType 1 and eType 2 DMRS, the FD-OCC 8 pattern DMRS may overlap with FD-OCC 4 pattern DMRS patterns for the same CDM group (e.g., CDM group 0). For example, referring to Fig. 4A, as described above, the eType 1 DMRS of the FD-OCC 8 pattern may occupy the REs 410, 412, 414, 416, 418, 420, 430 and 432. The DMRS of an eType 1 FD-OCC 4 pattern may occupy REs 410, 412, 414, 416 with retransmissions in the REs 418, 420, 430 and 432. Because the DMRS may be transmitted orthogonally, different UEs may transmit DMRS at the same time using the same resources. Thus, this means that a fully capable 6G UE that supports an eType 1 DMRS having an FD-OCC 8 pattern may be scheduled to transmit DMRs at the same time as a less capable 6G UE that supports only an eType 1 DMRS having an FD-OCC 4 pattern or even a legacy UE (e.g., 5G UE) that supports DMRS having a FD-OCC 4 pattern. The overlap may be similar for the eType 2 DMRS and allow for the same type of simultaneous scheduling.

In some example embodiments, PRB bundling may be used for DMRS. PRB bundling may refer to a scenario where precoding for more than one PRBs may be the same such that the channel estimation for the more than one PRBs may be performed jointly. In the example DMRS designs described above, a PRB bundle size of 4 may be used for an FD-OCC 8 pattern for DMRS Type 1. A PRB bundle size of 2 or 4 may be used for an FD-OCC 8 pattern for DMRS eType 2.

The example embodiments are also related to DMRS overhead reduction. This may be accomplished by constructing a DMRS pattern in a systematic manner allowing less DMRS to be transmitted. The following will provide examples of such reduced overhead DMRS patterns.

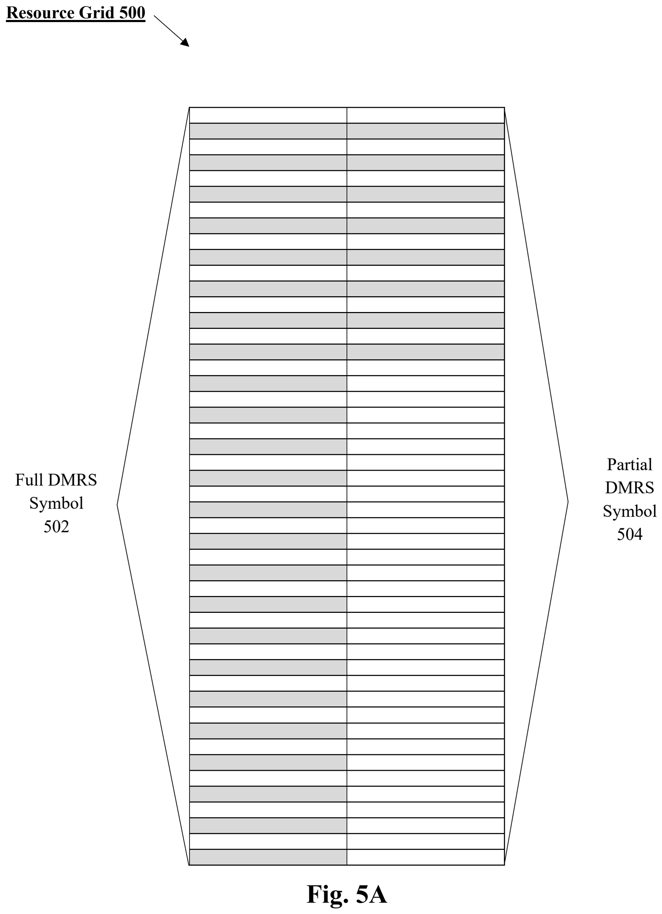

Fig. 5A shows a first example resource grid 500 for a 6G DMRS design comprising both full and partial DMRS symbols for a DMRS eType 1 scheme according to various example embodiments. The resource grid 500 depicts a reduced overhead DMRS design comprising both full and partial DMRS symbols for a DMRS eType 1 scheme. In this example, the full DMRS symbols 502 include a full DMRS OCC-8 pattern. The partial DMRS symbol 504 includes DMRS REs that span over a smallest unit to support 16 orthogonal DMRS ports. In this example, the partial DMRS comprises DMRS in 8 REs over a span of 16 REs. The remaining REs of the symbol are not used for DMRS, thereby reducing overhead.

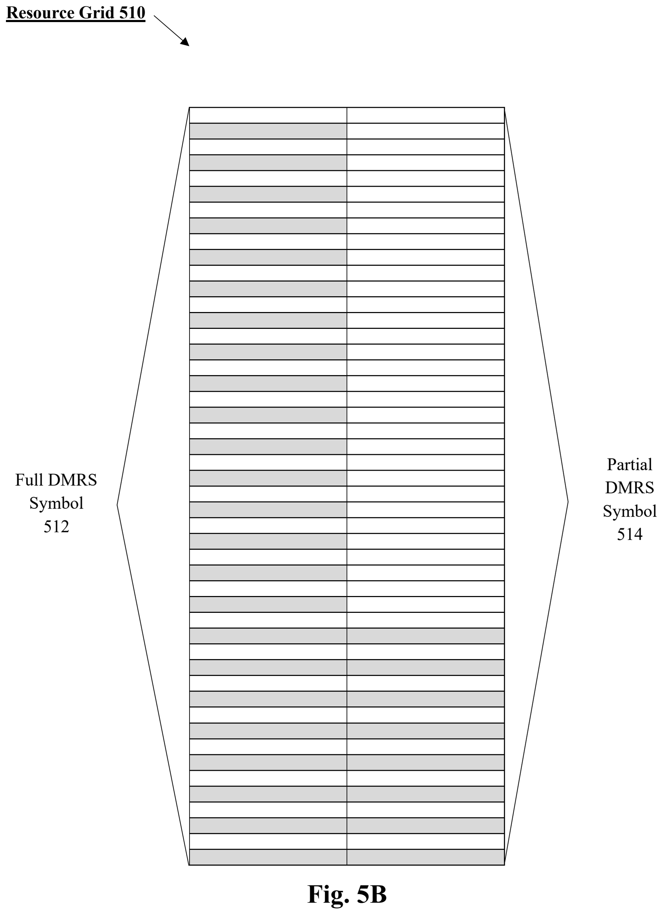

Fig. 5B shows a second example resource grid 510 for a 6G DMRS design comprising both full and partial DMRS symbols for a DMRS eType 1 scheme according to various example embodiments. The resource grid 510 depicts a reduced overhead DMRS design comprising both full and partial DMRS symbols for a DMRS eType 1 scheme. In this example, the full DMRS symbols 512 include a full DMRS OCC-8 pattern. The partial DMRS symbol 514 includes DMRS REs that span over a smallest unit to support 16 orthogonal DMRS ports. In this example, the partial DMRS comprises DMRS in 8 REs over a span of 16 REs. The remaining REs of the symbol are not used for DMRS, thereby reducing overhead. The difference between the example of Fig. 5A and Fig. 5B is that in Fig. 5A, the partial DMRS pattern is located in the higher frequency end of the symbol and in the example of Fig. 5B, the partial DMRS pattern is located in the lower frequency end of the symbol.

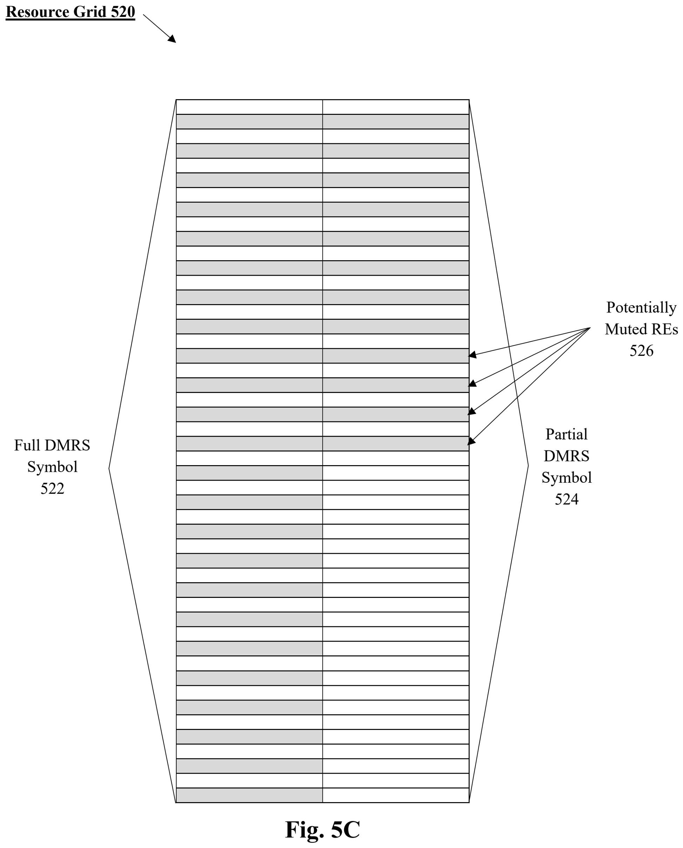

Fig. 5C shows a third example resource grid 520 for a 6G DMRS design comprising both full and partial DMRS symbols for a DMRS eType 1 scheme according to various example embodiments. The resource grid 520 depicts a reduced overhead DMRS design comprising both full and partial DMRS symbols for a DMRS eType 1 scheme. In this example, the full DMRS symbols 522 include a full DMRS OCC-8 pattern. The partial DMRS symbol 524 includes DMRS REs that do not span over an integer multiple of the smallest unit to support 16 orthogonal DMRS ports. For example, in the example of Fig. 5C, the partial DMRS symbol comprises 12 REs that span over 24 REs. In this example, a UE signaled with a DMRS design with OCC = 8, 4 REs 526 may be muted as orthogonal DMRS with OCC = 8 may not be generated with 4 REs rate-matching or puncturing. These 4 REs 526 that are muted for this UE may be used for Physical Downlink Shared Channel (PDSCH) or Physical Uplink Shared Channel (PUSCH) communications. However, for another UE that is signaled with DMRS design with OCC=4, the 4 REs 526 may not be muted because orthogonal DMRS with OCC = 4 may be generated with the 4 REs 526.

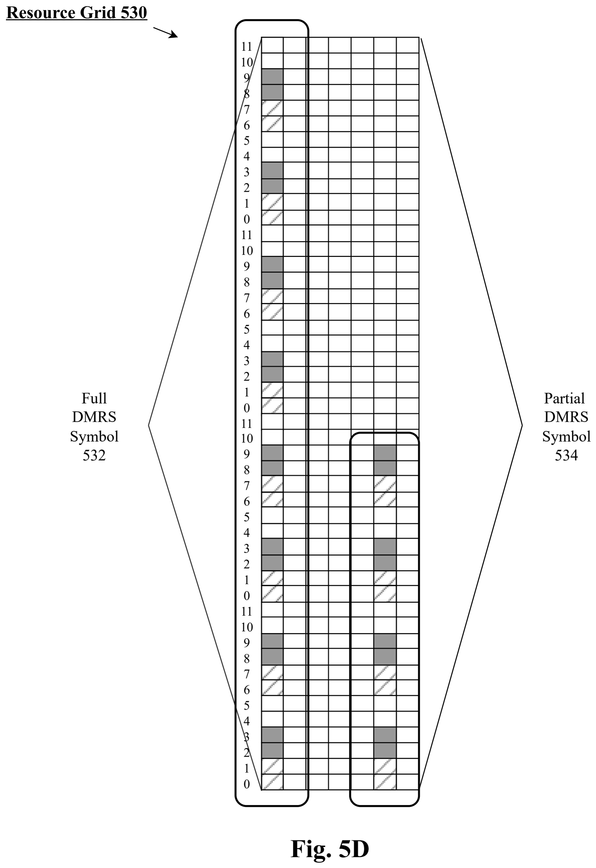

Fig. 5D shows a fourth example resource grid 530 for a 6G DMRS design comprising both full and partial DMRS symbols for a DMRS eType 2 scheme according to various example embodiments. The resource grid 530 depicts a reduced overhead DMRS design comprising both full and partial DMRS symbols for a DMRS eType 2 scheme. In this example, the full DMRS symbols 532 include a full DMRS OCC-8 pattern. The partial DMRS symbol 534 includes DMRS REs that span a smallest unit to construct a targeted number of orthogonal DMRS ports, e.g., in this example 24 REs.

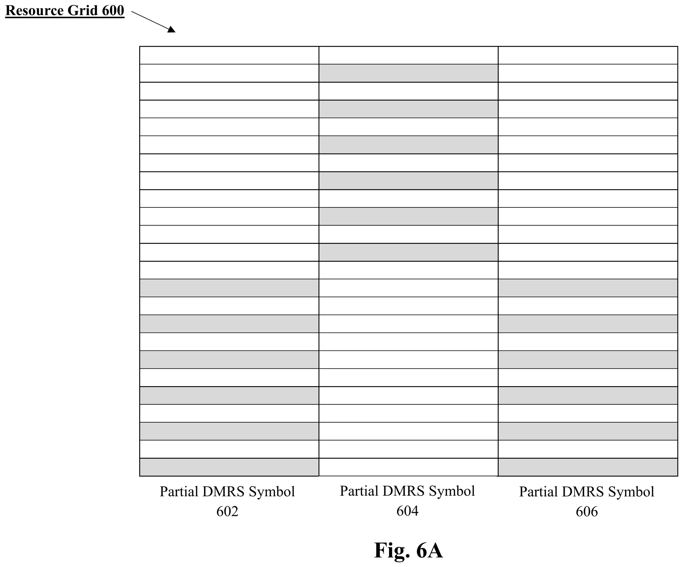

Fig. 6A shows a first example resource grid 600 for a 6G DMRS design comprising multiple partial DMRS symbols for a DMRS eType 1 scheme according to various example embodiments. The resource grid 600 depicts a reduced overhead DMRS design comprising multiple partial DMRS symbols for a DMRS eType 1 scheme. In this example, the partial DMRS symbols 602-606 include DMRS REs that span over a smallest unit to a desired number of orthogonal DMRS ports. As shown in Fig. 6A, the partial DMRS symbols may be distributed in the higher frequency end of the symbol, e.g., symbols 602 and 606, and the lower frequency end of the symbol, e.g., symbols 604.

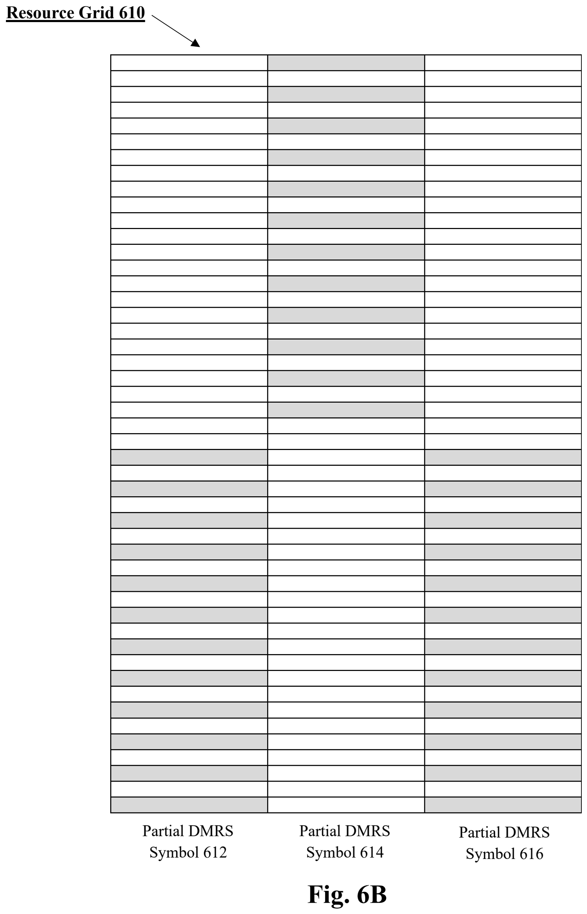

Fig. 6B shows a second example resource grid 610 for a 6G DMRS design comprising multiple partial DMRS symbols for a DMRS eType 1 scheme according to various example embodiments. The resource grid 610 depicts a reduced overhead DMRS design comprising multiple partial DMRS symbols for a DMRS eType 1 scheme. In this example, the partial DMRS symbols 612-616 include DMRS REs that span over a smallest unit to a desired number of orthogonal DMRS ports. As shown in Fig. 6B, the partial DMRS symbols may be distributed in the higher frequency end of the symbol, e.g., symbols 612 and 616, and the lower frequency end of the symbol, e.g., symbols 614.

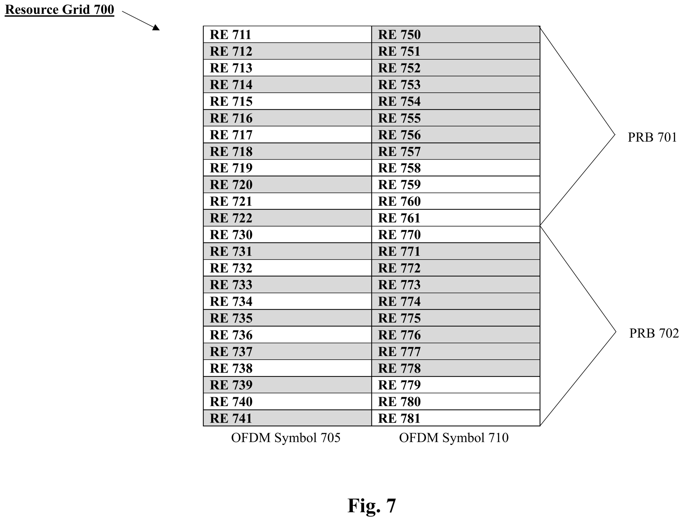

Fig. 7 shows an example resource grid for a 6G DMRS design comprising a conventional DMRS design and multiple ports of PT-RS. Fig. 7 will thus show a DMRS design where the DMRS ports of one OFDM symbol are mapped one-to-one with phase tracking reference signals (PTRS) ports of another OFDM symbol to help reduce DMRS overhead.

Resource grid 700 depicts two OFDM symbols 705 and 710 as well as two PRBs 701 and 702. Resource grid 700 also depicts various REs corresponding to the OFDMs 705 and 710 as well as to PRBs 701 and 702. REs 711-722 correspond to OFDM symbol 705 as well as PRB 701. REs 730-741 correspond to OFDM symbol 705 as well as PRB 702. REs 750-761 correspond to OFDM symbol 710 as well as PRB 701. REs 770-781 correspond to OFDM symbol 710 as well as PRB 702.

In OFDM symbol 705, the REs corresponding to PRB 701, e.g., REs 711-722, and those corresponding to PRB 702, e.g., REs 730-741, use a conventional DMRS design. In this instance, a conventional DMRS type 1 configuration is depicted as demonstrated by highlighted REs 712, 714, 716, 718, 720, 722, 731, 733, 735, 737, 739 and 741 corresponding to the OFDM 705 symbol. In the OFDM symbol 705, the RE patterns for eType 1 DMRS are illustrated. In other example embodiments, eType 2 DMRS may be utilized.

In OFDM symbol 710, the REs corresponding to PRB 601, e.g., REs 650-661, and those corresponding to PRB 602, e.g., REs 670 to 681, depict multiple ports of PTRS. To show this, REs 750-757 corresponding to PRB 701 and OFDM symbol 710, are highlighted while REs 771-778 corresponding to PRB 702 and OFDM symbol 710 are also highlighted.

While Resource Grid 700 depicts only two PRBs, e.g., PRB 701 and 702, and two OFDMs, e.g., OFDM 705 and 710, the DMRS and multi-PT-RS pattern depicted may be repeated over additional PRBs or OFDMs.

Since a PT-RS-like design is used as a low-overhead DMRS, the DMRS ports are associated with their respective PR-RS ports. In the case of a multi-PTRS port design, as depicted in Fig. 7, various design issues need to be considered. First, the time frequency resources taken by a PT-RS port need to be considered. For the same PT-RS port, this may be done using a grid-like design defined by time domain density and frequency density such as that used in new radio (NR) or the time-frequency resource taken by a PT-RS port may be an irregular pattern to facilitate channel estimation. For different PT-RS ports, each port may occupy different time-frequency resources or may occupy overlapping resources. Lastly, to facilitate multiple PT-RS ports, time domain OCC and/or frequency domain OCC may be applied.

Another consideration for multi-PTRS port design relates to the scrambling sequences applied to a PT-RS port. In one instance, this may be done by using the scrambling sequence applied to a PT-RS port according to a seed that takes a radio network temporary identifier (RNTI), e.g., a cell RNTI (C-RNTI), of the UE as a baseline. Then, the same scrambling sequence is applied to OCC sequences for different PT-RS ports on the same physical downlink shared channel (PDSCH). In another instance, to facilitate transmissions of the PT-RS ports to multiple UEs in Multi-User Multiple-Input Multiple-Output (MU-MIMO) pairing, the scrambling sequence applied to the PT-RS port is according to a seed that takes a configured value for the UE. In such an instance, it is then up to network implementation to configure the same value for multiple UEs so that the PDSCHs of multiple UEs would share the same scrambling sequence. In some example embodiments, the scrambling sequence constructions applied to DMRS and PT-RS may be different, e.g., one with a Gold scrambling sequence of one polynomial order, another with another with a different polynomial order, and/or the scrambling seeds may be different though the same scramble sequence may be utilized for both.

Another consideration for multi-PTRS design, the cover sequence design, MU-MIMO and Single-User Multiple-Input Multiple-Output (SU-MIMO) need to be considered. In MU-MIMO pairing, the MU interference between signals intended for different UEs is suppressed by the chosen precoders of the network. In such a case, even if signals for different UEs are not orthogonal, it would still be tolerable due to beamforming processing. Therefore, quasi-orthogonal cover sequences, e.g., mutual biased bases (MUB), may be used. Orthogonal cover sequences may help reduce the overhead that comes with using orthogonal ports at different PDSCHs when there is isolation among PT-RS ports for different PDSCHs. One advantage of utilizing quasi-orthogonal cover sequences is that given the same of sequence length, the number of generated quasi-orthogonal cover sequences is larger than orthogonal cover sequences such as the sequences from the Fourier matrix or the Walsh-Hadamard matrix, the larger number of sequences allows easier network planning and/or network scheduling. In some embodiments, the quasi-orthogonal cover sequences for UEs in cells adjacent to a cell can be signaled to a UE in the cell for interference estimation. For a UE with serving cell-1 at the cell boundary between cell-1 and cell-2, if the propagation delays from cell-1 and cell-2 are significantly different, the correlation property of CSI-RS with quasi-orthogonality will degrade. Thus, it may be advantaged to limit the use of quasi-orthogonal cover sequences for cells not suffering from such an issue, e.g., cells at the same cell site.

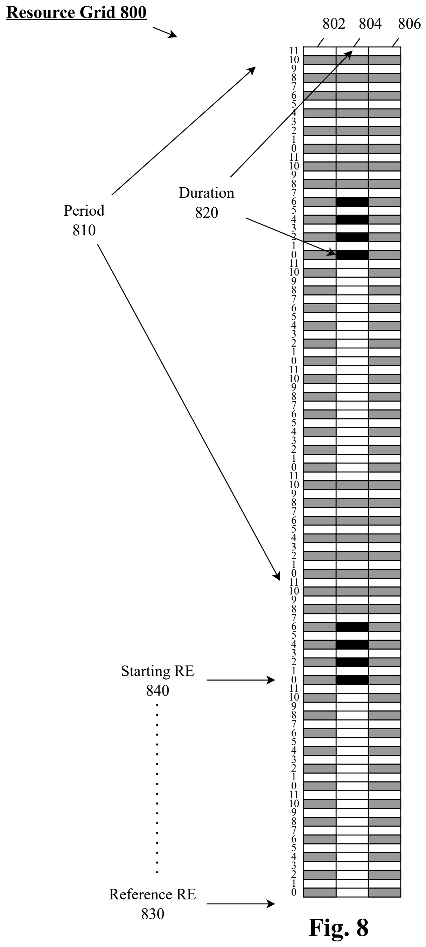

When using partial DMRS symbols, a UE may determine which REs are to be used for the partial symbols. This determination may be made based on network signaling or defined by standard (e.g., 3GPP Technical Specifications (TS)). An example of determining the REs for the partial DMRS symbol is described with reference to Fig. 8.

Fig. 8 shows an example of a resource grid 800 for a 6G DMRS design comprising both full and partial DMRS symbols for a DMRS eType 1 scheme according to various example embodiments. The example of Fig. 8 is similar to the example of Fig. 5C except extended out to more PRBs. In this example, there are full DMRS symbols 802 and 806 and a partial DMRS symbol 804.

In the example of Fig. 8, a starting RE of the partial DMRS pattern may include a determination for PDSCH/PUSCH of various numbers of PRBs. A period 810 and a duration 820 of the partial DMRS pattern may also be determined. In this example, the period 820 is 48 REs and the duration is 24 REs. The determination may also include the location of the muting pattern, if any, including a number of REs and the location of the REs as shown by the black muted REs in the partial DMRS symbol 804.

A reference RE/tone 830 for the (first) partial DMRS pattern may be determined. The reference point may be "Point A" in NR or some other common reference, so UEs configured with different BWPs may share the same reference RE/tone to facilitate the alignment of their partial DMRS symbols. For DMRS, e.g., those with OCC=8, a common reference is used to determine the starting PRB in a group of PRBs to construct the DMRS as illustrated in Figure 4A and 4B. In Figure 4A, the starting PRB is PRB 401. In Figure 4B, the starting PRB is PRB 451. For convenience of illustration, the direction in growth of the RE indexes may not be the same for different figures, e.g., in Figure 4A and Figure 4B, RE index increases downwards, and Figure 8, the RE index increases upwards. Since the same design may be used for the full DMRS symbols 802 and 806, the determination of the reference point may be decided jointly between full DMRS symbols and partial DMRS symbols. Based on the reference point, the starting RE 840 or the starting PRB for the partial DMRS symbol 804 may be determined.

The configuration for another UE, e.g., a UE that implements an OCC-4 and is configured with DMRS with OCC-4 may be different from the configuration described above for the UE that implements OCC-8 and is configured with DMRS with OCC-8, e.g., the starting RE, the duration, the period and the muting pattern.

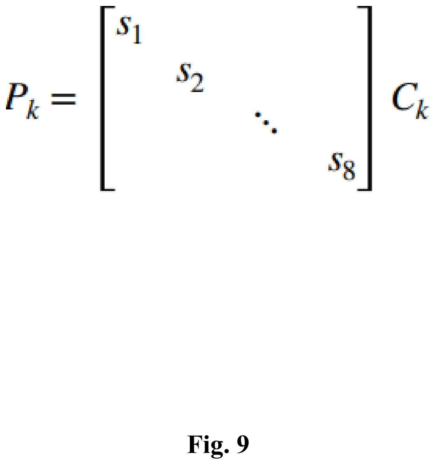

Fig. 9 shows an example equation for calculating the spreading matrix at a PDSCH k to reduce CSI-RS overhead according to various example embodiments. Fig. 9 depicts an equation used to calculate the spreading matrix at a PDSCH k, e.g., Pₖ. S₁-s₈, as depicted in Fig. 9, are from the Gold scrambling sequences, that may be common for a number of cells or TRPs. With frequency range 3 (FR3), the number of CSI-RS ports is expected to increase, e.g., to 256 or 512 ports. To acquire CSIs for multiple cells or multiple TRPs, CSI-RS may need to be transmitted at or for multiple cells or multiple TRPs. To enhance the channel measurement/estimation quality, on the REs where cell-1 transmits CSI-RS resource(s) for a large number of CSI-RS ports, there may be a need to mute the transmissions in other cells/TRPs near cell-1. To avoid interference to other cells/TRPs, cell-1 may also need to mute transmissions over the REs where other cells/TRPs transmit their CSI-RS resource(s). Then transmission patterns and muting patterns may be configured for CSI-RS transmissions.

Additionally or alternatively, when CSI-RS resources from multiple cells/TRPs are transmitted over overlapping resources, quasi-orthogonal cover sequences may be used. Cₖ, as depicted in Fig. 9, denotes an 8x8 matrix for the FD-OCC sequences. When reducing CSI-RS overhead, UEs will share the same scrambling seed but will use different cover sequences. For instance, quasi-orthogonal cover sequences, an MUB, quasi-orthogonal function (QoF), optimal QPSK modulated quasi-orthogonal functions for IS-2000, Hadamard matrices, Fourier matrices, etc. are various cover sequences that may be used. In some embodiments, the quasi-orthogonal cover sequences for UEs in cells adjacent to a cell can be signaled to a UE in the cell for interference estimation. For a UE with serving cell-1 at the cell boundary between cell-1 and cell-2, if the propagation delays from cell-1 and cell-2 are significantly different, the correlation property of CSI-RS with quasi-orthogonality will degrade. Thus, it may be advantaged to limit the use of quasi-orthogonal cover sequences for cells not suffering from such an issue, e.g., cells at the same cell site.

### Examples

In a first example, a method, comprising determining a demodulation reference signal (DMRS) configuration comprising a DMRS pattern for a frequency domain orthogonal cover code 8 (FD-OCC-8) and generating, for transmission to a base station, DMRS in accordance with the DMRS configuration.

In a second example, the method of the first example, wherein the DMRS comprise DMRS eType 1 DMRS.

In a third example, the method of the second example, wherein the DMRS pattern comprises eight resource elements (REs) of DMRS, wherein each DMRS RE is separated from another RE of DMRS by at least one RE not including DMRS and, wherein six of the eight REs are in a first Physical Resource Block (PRB) and two of the eight REs are in a second PRB that is adjacent in frequency to the first PRB.

In a fourth example, the method of the third example, wherein the first and second PRBs are bundled in a PRB bundle of at least four PRBs, wherein bundled PRBs comprise a same precoding.

In a fifth example, the method of the first example, wherein the DMRS comprise DMRS eType 2 DMRS.

In a sixth example, the method of the fifth example, wherein the DMRS pattern comprises eight resource elements (REs) of DMRS comprising four sets of REs, wherein each set comprises REs adjacent in frequency, wherein each set of two DMRS REs is separated from another set of two DMRS REs by at least one RE and, wherein four of the eight REs are in a first Physical Resource Block (PRB) and four of the eight REs are in a second PRB that is adjacent in frequency to the first PRB.

In a seventh example, the method of the sixth example, wherein the first and second PRBs are bundled in a PRB bundle of at least two PRBs, wherein bundled PRBs comprise a same precoding.

In an eighth example, the method of the first example, wherein the DMRS pattern comprises full DMRS symbols and partial DMRS symbols.

In a ninth example, the method of the eighth example, wherein the partial DMRS symbols comprise a number of DMRS that is a smallest multiple of DMRS in the full DMRS symbols that support a predefined number of orthogonal DMRS ports.

In a tenth example, the method of the eighth example, wherein the partial DMRS symbols comprise a number of DMRS that is not a multiple of DMRS in the full DMRS symbols that support a predefined number of orthogonal DMRS ports, wherein any DMRS in the partial DMRS symbol that are greater than a number of DMRS that is a smallest multiple of DMRS in the full DMRS symbols that support the predefined number of orthogonal DMRS ports are candidates for muting.

In an eleventh example, the method of the eighth example, wherein the DMRS configuration comprises values for a period, a duration and a reference resource element (RE) for the partial DMRS symbols, wherein the method further comprises determining a starting RE for the DMRS of the partial DMRS symbols based on one or more of the period, the duration and the reference RE.

In a twelfth example, the method of the first example, wherein the DMRS pattern comprises multiple partial DMRS symbols.

In a thirteenth example, the method of the twelfth example, wherein a first partial DMRS symbol of the multiple partial DMRS symbols comprises resource elements (REs) having DMRS in different frequencies than REs having DMRS of a second partial DMRS symbol of the multiple partial DMRS symbols.

In a fourteenth example, the method of the twelfth example, wherein the DMRS configuration comprises values for a period, a duration and a reference resource element (RE) for the partial DMRS symbols, wherein the method further comprises determining a starting RE for the DMRS of the partial DMRS symbols based on one or more of the period, the duration and the reference RE.

In a fifteenth example, the method of the first example, wherein the DMRS configuration comprises DMRS symbols comprising DMRS and Phase Tracking Reference Signals (PT-RS) symbols comprising PT-RS.

In a sixteenth example, the method of the fifteenth example, wherein time-frequency resources used by a PT-RS port for the PT-RS are regular patterns defined by a time domain density and a frequency domain density of the PT-RS.

In a seventeenth example, the method of the fifteenth example, wherein time-frequency resources used by a PT-RS port for the PT-RS are irregular patterns.

In an eighteenth example, the method of the fifteenth example, wherein different PT-RS ports occupy different time-frequency resources.

In a nineteenth example, the method of the fifteenth example, wherein different PT-RS ports occupy overlapping time-frequency resources.

In a twentieth example, the method of the fifteenth example, wherein time domain OCC (TD-OCC) or FD-OCC are applied to the PT-RS.

In a twenty first example, the method of the fifteenth example, wherein a scrambling sequence applied to a PT-RS port is based on a seed related to a Radio Network Temporary Identifier (RNTI) of a user equipment (UE), wherein the scrambling sequence is applied to OCC sequences for different PT-RS ports on a same shared channel.

In a twenty second example, the method of the fifteenth example, wherein a scrambling sequence applied to a PT-RS port is based on a seed configured in the DMRS configuration.

In a twenty third example, the method of the fifteenth example, wherein a spreading matrix for PT-RS ports at a Physical Downlink Shared Channel (PDSCH) k is defined as: $\left[\begin{matrix}{S}_{k , 1} & & & & & & & \\ & {S}_{k , 2} & & & & & & \\ & & {S}_{k , 3} & & & & & \\ & & & {S}_{k , 4} & & & & \\ & & & & {S}_{k , 5} & & & \\ & & & & & {S}_{k , 6} & & \\ & & & & & & {S}_{k , 7} & \\ & & & & & & & {S}_{k , 8}\end{matrix}\right] C$ ,where C is a matrix for TD-OCC or FD-OCC sequences, and *S*_{*k,*1},*S_{k,2}*, ... *S*_{*k*,8} are from a Gold scrambling sequence.

In a twenty fourth example, the method of the fifteenth example, wherein one of a Mutual Unbiased Basis (MUB) scrambling sequence, a Quasi-Orthogonal Function (QoF) sequence, an optimal QPSK modulated quasi-orthogonal sequence, Hadamard matrices or Fourier matrices are applied as a scrambling sequence for PT-RS ports.

In a twenty fifth example, a processor configured to perform any of the methods of the first through twenty fourth examples.

In a twenty sixth example, a user equipment configured to perform any of the methods of the first through twenty fourth examples.

Those skilled in the art will understand that the above-described example embodiments may be implemented in any suitable software or hardware configuration or combination thereof. An example hardware platform for implementing the example embodiments may include, for example, an Intel x86 based platform with compatible operating system, a Windows OS, a Mac platform and MAC OS, a mobile device having an operating system such as iOS, Android, etc. The example embodiments of the above described method may be embodied as a program containing lines of code stored on a non-transitory computer readable storage medium that, when compiled, may be executed on a processor or microprocessor.

Although this application described various embodiments each having different features in various combinations, those skilled in the art will understand that any of the features of one embodiment may be combined with the features of the other embodiments in any manner not specifically disclaimed or which is not functionally or logically inconsistent with the operation of the device or the stated functions of the disclosed embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

It will be apparent to those skilled in the art that various modifications may be made in the present disclosure, without departing from the spirit or the scope of the disclosure. Thus, it is intended that the present disclosure cover modifications and variations of this disclosure provided they come within the scope of the appended claims and their equivalent.

### Exemplary apparatus is set out in the following items:

1. An apparatus comprising processing circuitry coupled to memory, wherein the processing circuitry is configured to:
   determine a demodulation reference signal (DMRS) configuration comprising a DMRS pattern for a frequency domain orthogonal cover code 8 (FD-OCC-8); and
   generate, for transmission to a base station, DMRS in accordance with the DMRS configuration.
2. The apparatus of item 1, wherein the DMRS comprise DMRS eType 1 DMRS.
3. The apparatus of item 2, wherein the DMRS pattern comprises eight resource elements (REs) of DMRS, wherein each DMRS RE is separated from another RE of DMRS by at least one RE not including DMRS and, wherein six of the eight REs are in a first Physical Resource Block (PRB) and two of the eight REs are in a second PRB that is adjacent in frequency to the first PRB.
4. The apparatus of item 3, wherein the first and second PRBs are bundled in a PRB bundle of at least four PRBs, wherein bundled PRBs comprise a same precoding.
5. The apparatus of item 1, wherein the DMRS comprise DMRS eType 2 DMRS.
6. The apparatus of item 5, wherein the DMRS pattern comprises eight resource elements (REs) of DMRS comprising four sets of REs, wherein each set comprises REs adjacent in frequency, wherein each set of two DMRS REs is separated from another set of two DMRS REs by at least one RE and, wherein four of the eight REs are in a first Physical Resource Block (PRB) and four of the eight REs are in a second PRB that is adjacent in frequency to the first PRB.
7. The apparatus of item 6, wherein the first and second PRBs are bundled in a PRB bundle of at least two PRBs, wherein bundled PRBs comprise a same precoding.
8. The apparatus of item 1, wherein the DMRS pattern comprises full DMRS symbols and partial DMRS symbols.
9. The apparatus of item 8, wherein the partial DMRS symbols comprise a number of DMRS that is a smallest multiple of DMRS in the full DMRS symbols that support a predefined number of orthogonal DMRS ports.
10. The apparatus of item 8, wherein the partial DMRS symbols comprise a number of DMRS that is not a multiple of DMRS in the full DMRS symbols that support a predefined number of orthogonal DMRS ports, wherein any DMRS in the partial DMRS symbol that are greater than a number of DMRS that is a smallest multiple of DMRS in the full DMRS symbols that support the predefined number of orthogonal DMRS ports are candidates to be muted.
11. The apparatus of item 8, wherein the DMRS configuration comprises values for a period, a duration and a reference resource element (RE) for the partial DMRS symbols, wherein the processing circuitry is further configured to:
   determine a starting RE for the DMRS of the partial DMRS symbols based on one or more of the period, the duration and the reference RE.
12. The apparatus of item 1, wherein the DMRS pattern comprises multiple partial DMRS symbols.
13. The apparatus of item 12, wherein a first partial DMRS symbol of the multiple partial DMRS symbols comprises resource elements (REs) having DMRS in different frequencies than REs having DMRS of a second partial DMRS symbol of the multiple partial DMRS symbols.
14. The apparatus of item 12, wherein the DMRS configuration comprises values for a period, a duration and a reference resource element (RE) for the partial DMRS symbols, wherein the processing circuitry is further configured to:
   determine a starting RE for the DMRS of the partial DMRS symbols based on one or more of the period, the duration and the reference RE.
15. The apparatus of item 1, wherein the DMRS configuration comprises DMRS symbols comprising DMRS and Phase Tracking Reference Signals (PT-RS) symbols comprising PT-RS.
16. The apparatus of item 15, wherein time-frequency resources used by a PT-RS port for the PT-RS are regular patterns defined by a time domain density and a frequency domain density of the PT-RS.
17. The apparatus of item 15, wherein time-frequency resources used by a PT-RS port for the PT-RS are irregular patterns.
18. The apparatus of item 15, wherein different PT-RS ports occupy different time-frequency resources.
19. The apparatus of item 15, wherein different PT-RS ports occupy overlapping time-frequency resources.
20. The apparatus of item 15, wherein time domain OCC (TD-OCC) or FD-OCC are applied to the PT-RS.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. An apparatus comprising processing circuitry coupled to memory, wherein the processing circuitry is configured to:
determine a demodulation reference signal (DMRS) configuration comprising a DMRS pattern for a frequency domain orthogonal cover code 8 (FD-OCC-8); and
generate, for transmission to a base station, DMRS in accordance with the DMRS configuration.

2. The apparatus of claim 1, wherein the DMRS comprise DMRS eType 1 DMRS.

3. The apparatus of claim 2, wherein the DMRS pattern comprises eight resource elements (REs) of DMRS, wherein each DMRS RE is separated from another RE of DMRS by at least one RE not including DMRS and, wherein six of the eight REs are in a first Physical Resource Block (PRB) and two of the eight REs are in a second PRB that is adjacent in frequency to the first PRB.

4. The apparatus of claim 3, wherein the first and second PRBs are bundled in a PRB bundle of at least four PRBs, wherein bundled PRBs comprise a same precoding.

5. The apparatus of claim 1, wherein the DMRS comprise DMRS eType 2 DMRS.

6. The apparatus of claim 5, wherein the DMRS pattern comprises eight resource elements (REs) of DMRS comprising four sets of REs, wherein each set comprises REs adjacent in frequency, wherein each set of two DMRS REs is separated from another set of two DMRS REs by at least one RE and, wherein four of the eight REs are in a first Physical Resource Block (PRB) and four of the eight REs are in a second PRB that is adjacent in frequency to the first PRB.

7. The apparatus of claim 6, wherein the first and second PRBs are bundled in a PRB bundle of at least two PRBs, wherein bundled PRBs comprise a same precoding.

8. The apparatus of claim 1, wherein the DMRS pattern comprises full DMRS symbols and partial DMRS symbols.

9. The apparatus of claim 8, wherein the partial DMRS symbols comprise a number of DMRS that is a smallest multiple of DMRS in the full DMRS symbols that support a predefined number of orthogonal DMRS ports.

10. The apparatus of claim 8, wherein the partial DMRS symbols comprise a number of DMRS that is not a multiple of DMRS in the full DMRS symbols that support a predefined number of orthogonal DMRS ports, wherein any DMRS in the partial DMRS symbol that are greater than a number of DMRS that is a smallest multiple of DMRS in the full DMRS symbols that support the predefined number of orthogonal DMRS ports are candidates to be muted.

11. The apparatus of claim 8, wherein the DMRS configuration comprises values for a period, a duration and a reference resource element (RE) for the partial DMRS symbols, wherein the processing circuitry is further configured to:
determine a starting RE for the DMRS of the partial DMRS symbols based on one or more of the period, the duration and the reference RE.

12. The apparatus of claim 1, wherein the DMRS pattern comprises multiple partial DMRS symbols.

13. The apparatus of claim 12, wherein a first partial DMRS symbol of the multiple partial DMRS symbols comprises resource elements (REs) having DMRS in different frequencies than REs having DMRS of a second partial DMRS symbol of the multiple partial DMRS symbols.

14. The apparatus of claim 12, wherein the DMRS configuration comprises values for a period, a duration and a reference resource element (RE) for the partial DMRS symbols, wherein the processing circuitry is further configured to:
determine a starting RE for the DMRS of the partial DMRS symbols based on one or more of the period, the duration and the reference RE.

15. The apparatus of claim 1, wherein the DMRS configuration comprises DMRS symbols comprising DMRS and Phase Tracking Reference Signals (PT-RS) symbols comprising PT-RS.
